# DEMANDE DE BREVET EUROPEEN

(11) **EP 0 989 018 A1**
(43) Date de publication de la demande: **29.03.2000**
(21) Numéro de dépôt: 99402332.3
(22) Date de dépôt: 23.09.1999
(51) Int. Cl.: B60N 2/14

(54) **Base pivotante antiarrachement pour siège de véhicule**

(30) Priorité: 24.09.1998 FR 9811914
(71) Demandeur: Scora (Société à Responsabilité Limitée), 94470 Boissy-Saint-Leger (FR)
(72) Inventeur: Ctorza, Serge, 94470 Boissy-Saint-Leger (FR)
(74) Mandataire: Lhuillier, René

(57) **Abrégé**

Des couronnes profilées (4,5) sont rapportées sous la base pivotante (1) et ménagent entre elles un couloir circulaire (6) emprisonnant un jeu de galets (12). Ceux-ci sont montés en bout de tiges (11) rattachées rigidement au socle fixe (3) et s'opposant à l'arrachement de la base pivotante. La base repose sur le socle par un plateau cylindrique (8) et un roulement (10).

Application aux sièges pivotants notamment de camping-car.

## Description

L'invention se rapporte aux sièges pivotants montés sur véhicules de tous types et plus particulièrement les camping-car, et elle concerne plus précisément la base pivotante sur laquelle est fixée le siège.

Grâce à cette base pivotante, un utilisateur peut orienter le siège vers l'avant du véhicule ou l'arrière ou les côtés, selon la convenance. Cet avantage est particulièrement apprécié dans les camping-car. Mais quand le véhicule est en mouvement, le passager doit comme on sait être impérativement attaché par une ceinture de sécurité qui est accrochée au châssis du véhicule et/ou au siège lui-même par au moins deux points de fixation. La base pivotante est montée sur un axe central de rotation et repose sur des roulements disposés en couronne sur un socle fixe solidaire du châssis. On peut considérer ce socle fixe comme étant un plateau inférieur de la base pivotante.

En cas d'accident, si la ceinture n'est fixée qu'au siège, ce qui est une pratique de plus en plus courante et exigée des constructeurs, tous les efforts sont encaissés par l'ensemble formé par la base pivotante et le siège. Les systèmes connus de bases pivotantes à axe central ne peuvent résister à de telles contraintes et s'arrachent du socle fixe, ou encore le socle fixe lui-même peut se détacher du chassis.

La Demanderesse propose donc une nouvelle base pivotante antiarrachement qui résiste à des tensions très importantes et autorise le passager à utiliser le siège dans un véhicule en mouvement, en position face à la route mais aussi dos à la route.

L'invention a par conséquent pour objet principal une base pivotante antiarrachement pour siège de véhicule, formée d'une plaque montée sur un axe de pivotement rattaché à un socle fixe et utilisant des roulements à billes entre la base et le socle, base selon laquelle des couronnes profilées sont rapportées sous la base pivotante et ménagent entre elles un couloir circulaire emprisonnant un jeu de galets rattachés rigidement au socle fixe et s'opposant à l'arrachement de la base pivotante.

Selon une caractéristique particulière de l'invention, des renforts fixés à la base pivotante, coiffent les couronnes pour augmenter leur résistance à l'arrachement.

Avantageusement les galets sont montés en haut de tiges soudées au socle fixe et traversant une fente circulaire ménagée entre les couronnes.

D'autres caractéristiques particulières et avantages de l'invention ressortiront de la description qui va suivre d'un exemple non limitatif de réalisation dans lequel il est fait référence aux dessins annexes qui représentent
figure 1 une vue en coupe verticale selon I-I de la figure 2
figure 2 une vue de dessous de la base pivotante
figures 3 et 4, des variantes de réalisation de la base pivotante selon la figure 2.

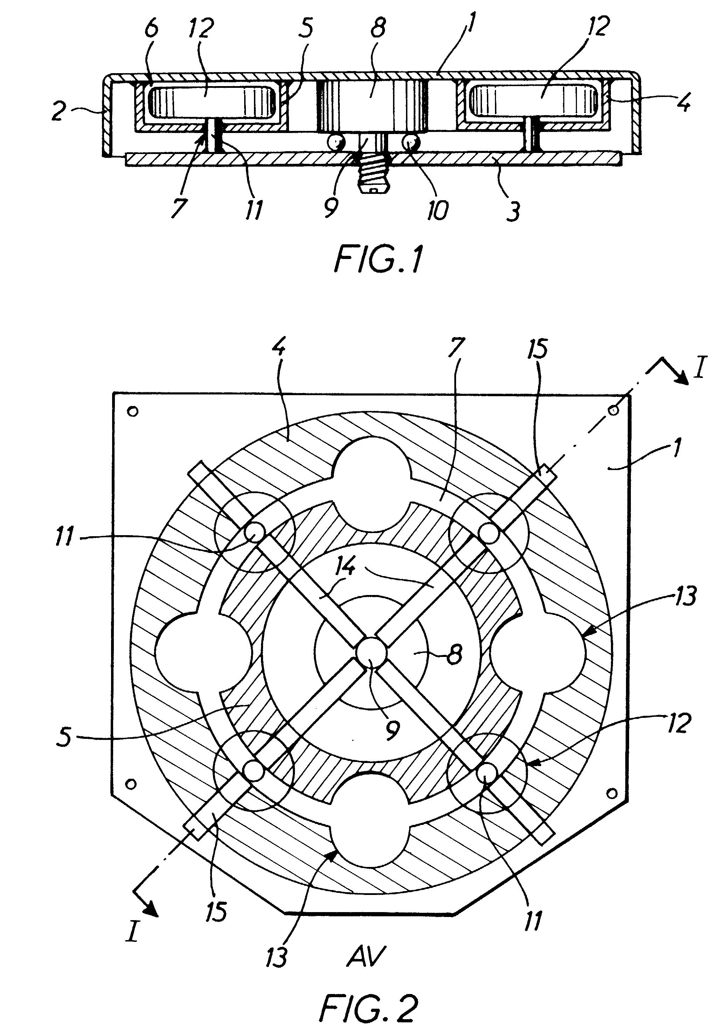

Les figures 1 et 2 montrent une base pivotante 1 essentiellement constituée d'une plaque plane carrée ayant ses arêtes inclinées du côté AV du siège, et de rebords 2 en périphérie, qui sont orientés vers le bas en direction du socle fixe ou plateau inférieur 3. Sous la base pivotante est rapportée une couronne extérieure 4 profilée en forme de L dont la partie horizontale est orientée en direction du centre, ainsi qu'une couronne intérieure 5 également profilée en forme de L, mais dont la partie horizontale est orientée vers l'extérieur, vis-à-vis de la couronne 4. Les couronnes 4 et 5 sont soudées par leurs bords sous la base pivotante. Les deux couronnes ménagent entre elles un couloir circulaire 6 pourvu d'une fente centrale 7.

La base pivotante 1 est en appui en son centre sur un plateau cylindrique 8 auquel elle est soudée, ledit plateau étant lui-même solidaire d'un axe 9 qui traverse une ouverture centrale prévue dans le socle 3. Le plateau cylindrique 8 repose sur le socle par l'intermédiaire d'un roulement à bille 10, centré sur l'axe. L'épaisseur du plateau et du roulement définit la distance séparant la base pivotante du socle fixe. Cette distance est réglable par le fait que l'extrémité de l'axe 9 est filetée et coopère avec un taraudage prévu dans le socle fixe.

La fente centrale 7 sert de guide à quatre petites tiges verticales 11 soudées au socle fixe. Ces tiges portent chacune à leur extrémité supérieure un galet 12 tournant librement sur l'axe de la tige. Les galets 12 sont ainsi emprisonnés dans le couloir 6, ses flancs inférieurs étant bloqués par les couronnes 4 et 5. Quatre échancrures circulaires 13 sont prévues dans lesdites couronnes au milieu des quatre côtés de la base pivotante, pour permettre l'extraction de galets comme on le verra plus loin.

On voit à la figure 2 des renforts 14 en étoile qui sont soudés sous la base pivotante et coiffent, par leurs extrémités la couronne intérieure 5. En face de ces renforts 14, d'autres renforts extérieurs 15 également soudés sous la base pivotante coiffent la couronne extérieure 4. Ils ont pour objet de maintenir fermement les couronnes (4, 5) pour qu'elles résistent aux contraintes qui peuvent s'exercer sur les galets en cas d'arrachement de la base pivotante.

Pour le montage ou le démontage, on dévisse l'axe central 9 ce qui permet de tourner la base pivotante 1 et placer ainsi les galets 12 à l'aplomb des échancrures 13. On peut alors séparer la base du socle fixe.

Une pluralité de roulements à billes non représentés peuvent être agencés par ailleurs entre la base et le socle pour compléter les points d'appui entre les deux pièces.

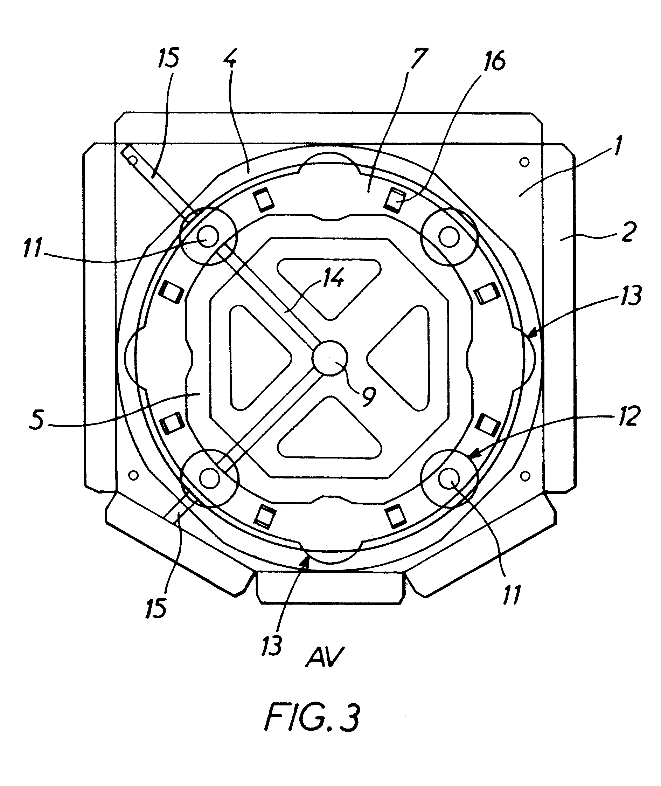

La figure 3 illustre une variante préférentielle de réalisation dans laquelle les mêmes éléments portent les mêmes références. Cette variante montre les rebords 2 de la base pivotante 1 en position déployée. En outre une série de roulements supplémentaires 16 sont prévus entre les couronnes 4 et 5.

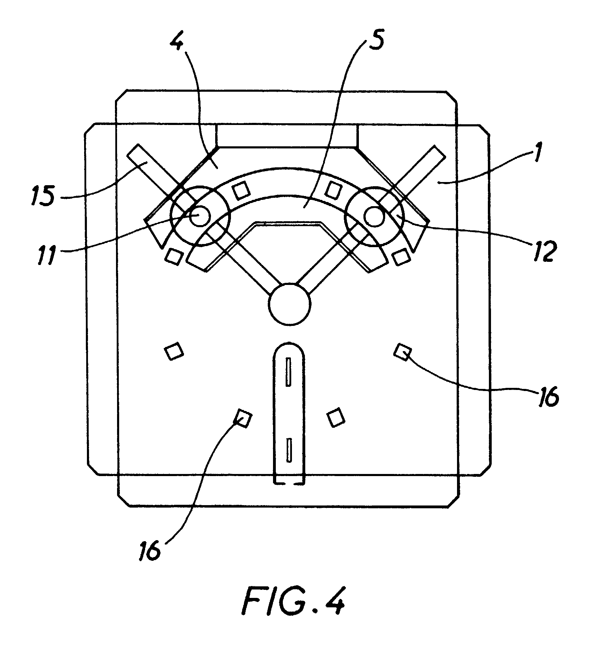

La figure 4 est une autre variante de réalisation simplifiée dans laquelle la base pivotante ne comporte qu'une portion de couronnes profilées (4,5) et seulement deux galets 12. Des roulements 16 sont prévus sur toute la périphérie.

## Revendications

1. Base pivotante antiarrachement pour siège de véhicule, formée d'une plaque montée sur un axe de pivotement rattaché à un socle fixe représentant la partie basse de la base pivotante, utilisant des roulements à billes entre la base et le socle et comportant des galets emprisonnés dans des couronnes profilées pour s'opposer à l'arrachement de la base pivotante caractérisée en ce que les couronnes profilées (4, 5) sont rapportées sous la base pivotante (1) et ménagent entre elles un couloir circulaire (6) emprisonnant le jeu de galets (12) rattachés rigidement au socle fixe (3) par des tiges (11) traversant une fente circulaire (7) ménagée entre les couronnes.

2. Base pivotante selon la revendication 1 caractérisée en ce que des renforts (14, 15) fixés à la base pivotante (1), coiffent les couronnes (4, 5) pour augmenter leur résistance à l'arrachement.

3. Base pivotante selon la revendication 1 caractérisée en ce qu'elle repose sur le socle fixe (3) par l'intermédiaire d'un plateau cylindrique (8) et d'au moins un roulement à bille (10), centrés sur un axe (9) dont l'extrémité filetée coopère avec le socle fixe.

4. Base pivotante selon la revendication 1 caractérisée en ce que des échancrures circulaires (13), en nombre correspondant au nombre des galets (12), sont prévues dans les couronnes (4, 5) pour le démontage de la base pivotante.
